# EUROPEAN PATENT SPECIFICATION

(11) **EP 0 863 343 B1**
(45) Date of publication and mention of the grant of the patent: **16.11.2005**
(21) Application number: 98301525.6
(22) Date of filing: 02.03.1998
(51) Int. Cl.: F16K 15/14

(54) **Non-return valve**
Rückschlagventil
Clapet de retenue

(30) Priority: 05.03.1997 GB 9704489
(43) Date of publication of application: 09.09.1998
(73) Proprietor: Clarke, Peter, Southwell, Nottingham NG25 0TX (GB); Clarke, Edit, Southwell, Nottingham NG25 0TX (GB); Clarke, Brendon, Southwell, Nottingham NG25 0TX (GB); Clarke, Carl, Southwell, Nottingham NG25 0TX (GB); Clarke, Cheryl, Southwell, Nottingham NG25 0TX (GB); Clarke, Rene, Southwell, Nottingham NG25 0TX (GB)
(72) Inventor: Clarke, Brendan, Alexander c/o Energy Chemical & E, Southwell, Nottinghamshire NG25 0TX (GB)
(74) Representative: Dealtry, Brian

(56) References cited:
- EP-A- 0 278 125
- EP-A- 0 545 678
- DE-A- 19 633 642
- FR-A- 996 998
- GB-A- 2 095 584
- US-A- 1 989 145
- US-A- 4 870 992

## Description

The present invention relates to a valve, and more particularly, to a valve including resiliently deformable lips which can be deformed from a closed position to an open position and then can resume the closed position. Valves of this sort are sometimes called 'cuspic' valves.

Prior art cuspic valves are found in use in the sludge processing industry as one-way or non-return valves on the inlets and outlets of sludge pumps. A prior art cuspic valve on the inlet of a positive displacement pump works as follows. During the upstroke of the positive displacement pump when fluid is being drawn into the pump, the fluid pressure at the inlet deforms the lips of the valve such that they pucker open, thereby permitting fluid into the pump. During the downstroke of the positive displacement pump when fluid is expelled from the pump, the lips resume their closed position sealing off the pump inlet.

Over a period of time, it has been found that the lips of such valves tend to petal out or yawn open such that the lips can no longer form an effective seal against one another. This is thought to be a reaction to mechanical fatigue and/or chemical attack from the sludge. As a result, the efficiency of the associated pump can be severely impaired.

The present invention is based on the discovery that the shape of the lips can be selected to increase the inherent structural resistance to the above-mentioned distortion.

Known moulded cuspic valves are formed with the shape of the valve lips defined in one of two ways: either they are finished across the lip length with a uniform thickness and are square; or they have a convexed shape (where the lips are bowed outwards) in an attempt to support the pressure more evenly across the surface of the moulding.

US Patent number 4870992 discloses a backflow prevention device for use in wastelines and the like having a one piece yieldably deformable valving member which permits the free flow of liquids in one direction but blocks the flow of liquids and gasses in the opposite direction.

European Patent Application EP-A-0278125 discloses a flexible storage and dispensing package for fluid material. The package includes a self-sealing dispensing valve which opens at a predetermined threshold level, the dispensing valve having a centrally located portion comprised of resilient material and exhibiting a predetermined concave shape in a substantially unstressed condition. The concave shaped resilient portion of the valve further includes at least one substantially linear slit.

European Patent Application EP-A-0545678 discloses a dispensing package for fluid products such as liquid soaps including a container with a self-sealing dispensing valve.

French Patent number 996998, which represents the closest prior art, discloses a closure means for plastic tubes comprising a body of elastic material having an upper face and an annular flange. The upper face has a central indented portion pierced with at least one slit. On the exterior surface of the upper face there are two longitudinal projections or lips the length of the sides of the slit. On the interior surface of the upper face, there is a low cut shape constituting an entrance to the self-closing orifice of the device.

The present invention provides a valve in accordance with claim 1 of the appended claims. Preferred embodiments of the invention are defined in the dependent claims.

The bowing of the deformable lip, especially at its inner portion, increases the inherent structural resistance of valve to the above-mentioned distortion.

The internal lip profile determines where the valve seals and it is here that a valve will fail if there is any distortion in the material. The inward bowing of the lips helps to seal effectively by pressing each lip against each other as the outer part of the valve tries to splay apart.

The outer portion of the deformable lip can also be bowed inwardly along its long axis. Preferably, all of the lips are deformable.

In one embodiment, the valve comprises a single pair of lips.

In another embodiment, the valve comprises three pairs of lips. Each pair of lips extends outwardly from a single, central region.

In another embodiment, the valve comprises four pair of lips. Each pair of lips extends outwardly from a single, central region, the lips thereby forming a cross shape in the first undeformed position.

The scope of the present invention is not limited by the material from which the valve is made nor its method of formation. For example, the valve can be made from rubber or plastics and can be manufactured by moulding or shaped on a former.

The degree of bowing of the outer portion can be different to that of the inner portion.

Preferably the bowing of the inner portion is greater than the bowing of the outer portion.

Exemplary embodiments of the invention are hereinafter described with reference to the accompanying drawings, in which:
Figures 1(a) and (b) show perspective views of a single lip-pair non-return valve in accordance with the present invention;
Figure 1(c) shows the valve of Figures 1(a), 1(b) when viewed in cross-section from the line A-A in Figure 1(b);

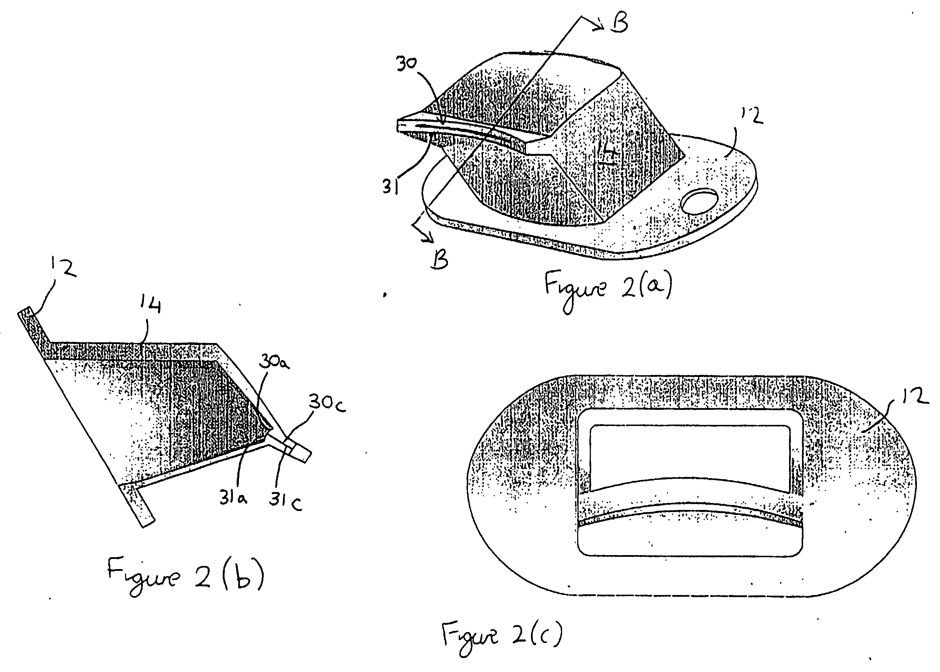

Figure 2(a) shows a perspective view of another single lip-pair non-return valve in accordance with the present invention;
Figure 2(b) shows the valve of Figure 2(a) when viewed in cross-section from the line B-B in Figure 2(a);
Figure 2(c) shows the valve of Figure 2(a) when viewed from above with parts removed;

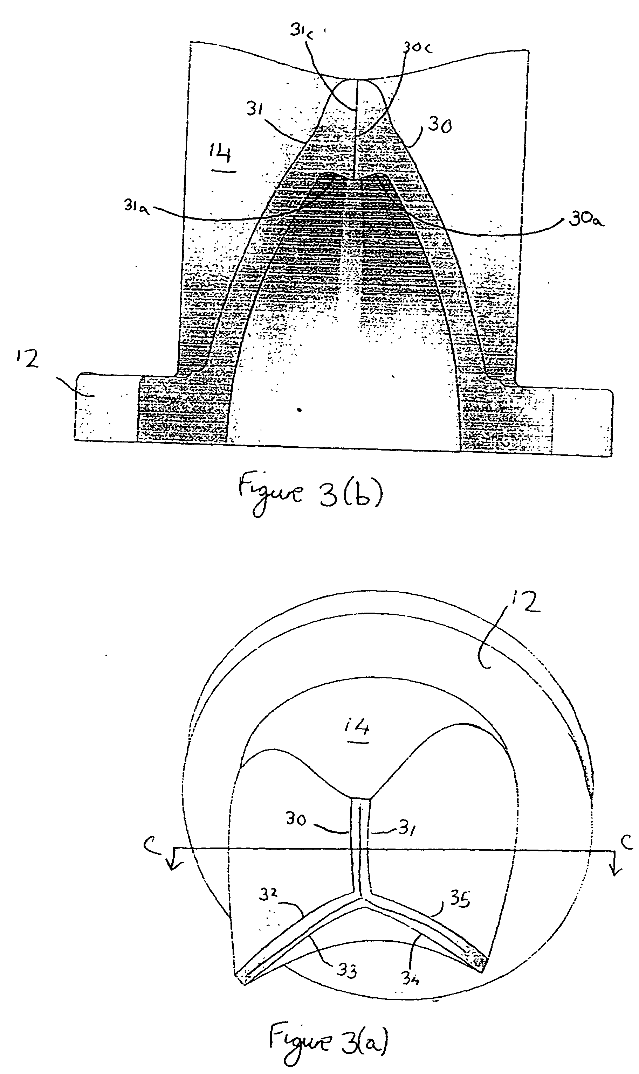

Figure 3(a) shows a perspective view of a three lip-pair non-return valve in accordance with the present invention;
Figure 3(b) shows a cross-sectional view from the line C-C in Figure 3(a) of the valve in Figure 3(a);

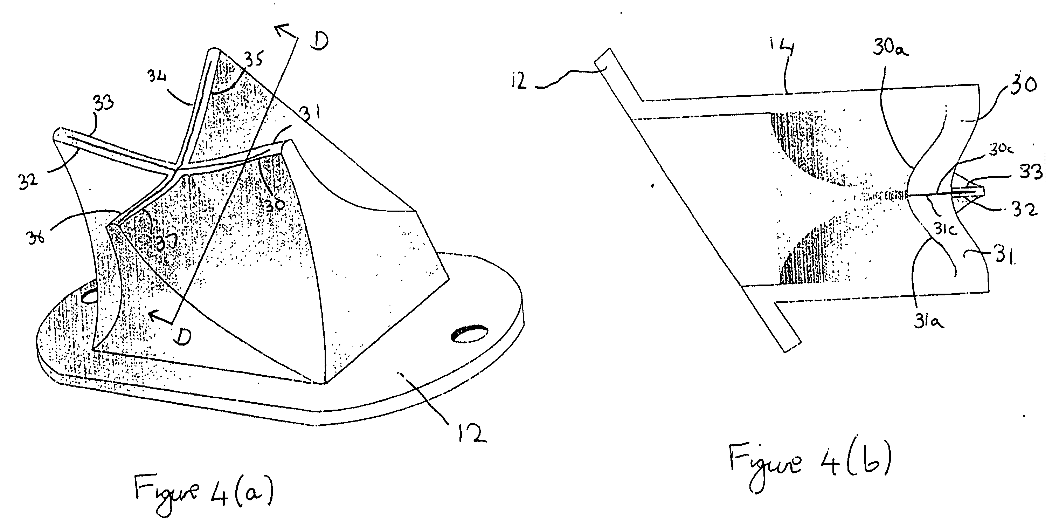

Figure 4(a) shows a perspective view of a four lip-pair non-return valve in accordance with the present invention; and
Figure 4(b) shows a cross-sectional view from the line D-D in Figure 4(a) of the valve in Figure 4(a).

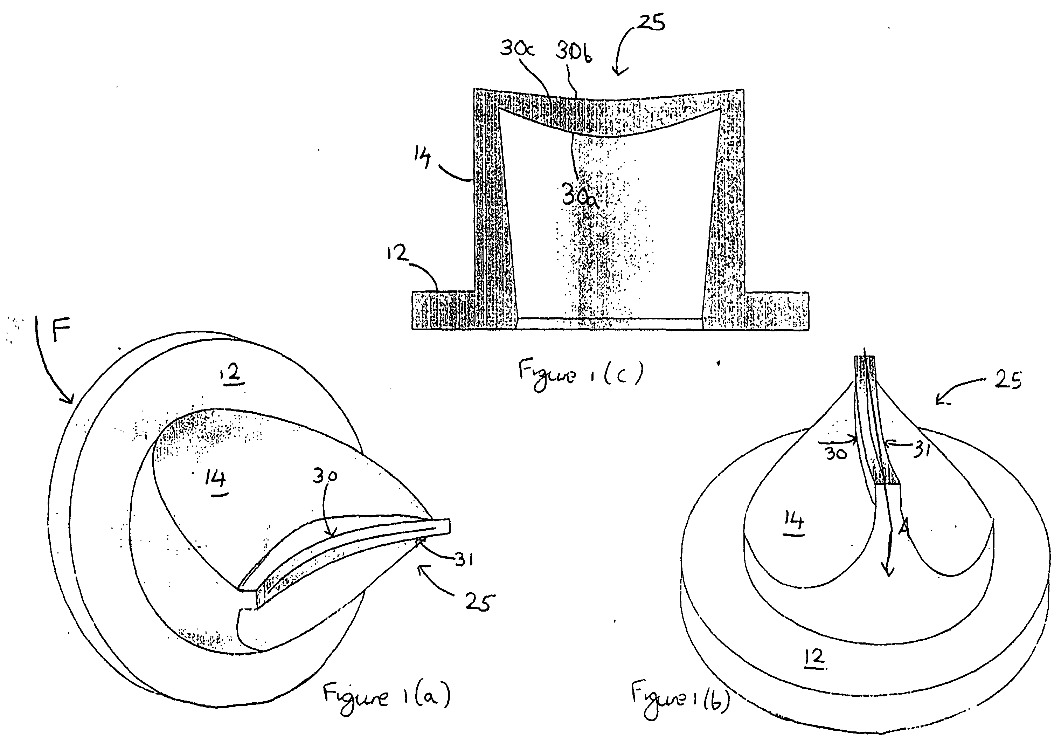

Referring to Figures 1 (a-c), a single lip-pair cuspic valve, made from a resiliently deformable material such as natural or synthetic rubber, is generally designated 10. The valve 10 comprises an annular base 12 at a first, inlet end thereof; a port 25 at a second opposite outlet end thereof; and a wall 14 connecting the base 12 and the port 25 to each other and defining a chamber therebetween.

The port 25 is defined by a pair of lips 30,31 each lip comprising elongate inner and outer portions suffixed a and b, respectively, and an elongate sealing portion suffixed c which as illustrated in Figures I (a) and 1(b) engages the sealing portion on the other lip. The valve 10 is deformable such that the lips 30,31 pucker open such that their sealing portions 30c,31c do not engage each other, thus forming an outlet. Once the deforming force is removed, the lips 30,31 resume the illustrated closed position.

This may be further illustrated by considering the operation of the valve 10 in use on the inlet of a positive displacement pump. The valve 10 is arranged such that the lips 30,31 are closer to the internal chamber of the displacement pump than is the base 12. During the upstroke of the pump when fluid is being drawn in to the pump, the fluid pressure entering the valve 10, as illustrated by the arrow F in Figure 1(a), causes the deformation and hence the puckering open of the lips 30,31 to permit fluid flow through the valve 10. During the downstroke of the pump, the lips 30,31 resume their closed position (where the sealing portions 30c,31c seal against each other) thereby closing off the pump inlet.

In accordance with the present invention, the inward bowing of the lips 30,31 increases the inherent structural resistance of the valve 10 to the aforementioned distortion. This is thought to be the case because as the valve starts to distort by yawning open, as is believed to be inevitable, the shape of the lips 30,31 forces the sealing portions 30c, 31c closer together at least in the region of their inner portions 30a,31a, thereby maintaining the seal.

The remaining Figures show the concept of the present invention applied to other types of cuspic valve. Throughout these Figures an analogous system of reference numerals has been used.

The internal lip profile of the cuspic valve according to the invention provides great improvement in the overall valve reliability since this is the area where the valve seals and thus it is here that the valve will fail if there is any distortion in the rubber or other material from which the valve is made. As there is usually some degree of distortion to rubber or plastics material after being submerged in a chemical solution of some kind, there will nearly always be some degree of splaying out of the valve lips. It is here that having a concave shape to the internal side of the lips of the cuspic valve according to the invention help to seal by pressing against each other as the outer part of the valve tries to splay apart. This helps to improve the life of the cuspic valve, whether it is moulded or formed, or made from a natural or synthetic material. Since a cuspic valve splays away from the centre as the material swells, the inner bow helps to continue the seal area and thereby extend the life of the valve. Regardless of the outer valve shape on the cuspic valve, the inner profile according to the invention will extend the life of the valve, even when the valve distorts, because it accommodates the natural distortion that has to be accepted within the interaction between a chemical solution and a moulded or formed cuspic valve.

## Claims

1. A valve (10) having an inlet end, an outlet end, a wall (14) defining a chamber therebetween, and a port (25) at the outlet end defined by one or more pairs of lips (30,31), each lip (30,31) comprising elongate inner (30a,31a) and outer (30b,31b) portions linked by an elongate sealing portion (30c,31c) for engaging with the corresponding sealing portion of the other lip of the pair of lips, each lip being resiliently deformable from a first position in which the port (25) is closed by engagement of the sealing portions with one another to a second position in which the port (25) is open, the valve being **characterised in that** the inner portion (30a,31a) of each of the deformable lips is bowed inwardly into the chamber along the length of the lip and perpendicular to the long axis of the lip, the inner portion being bowed towards the line of the sealing edge between the inner portion and the sealing portion (30c,31c) of the lip.

2. A valve (10) as in Claim 1, **characterised in that** the outer portion (30b,31b) of the deformable lip is also bowed inwardly along its long axis.

3. A valve (10) as in Claim 1, **characterised in that** the degree of bowing of the outer portion (30b,31b) is different to the degree of bowing of the inner portion (30a,31a).

4. A valve (10) as in Claim 3, **characterised in that** the degree of bowing of the inner portion (30a,31a) is greater than the degree of bowing of the outer portion (30b,31b).

## Patentansprüche

1. Ventil (10), das ein Einlassende, ein Auslassende, eine Wand (14), die dazwischen eine Kammer umschließt und am Auslassende eine Mündungsöffnung (25) besitzt, die von einem oder mehreren Paaren von Lippen (30, 31) begrenzt wird, wobei jede Lippe (30, 31) lang gestreckte innere Teile (30a, 31 a) und äußere Teile (30b, 31b) umfasst, die durch einen lang gestreckten Dichtteil (30c, 31c) verbunden sind, der dazu dient, mit dem entsprechenden Dichtteil der anderen Lippe des Lippenpaares in Eingriff zu treten, wobei jede Lippe aus einer ersten Stellung, in der die Mündungsöffnung (25) **dadurch** verschlossen ist, dass die Dichtteile miteinander in Eingriff stehen, in eine zweite Stellung elastisch verformbar ist, in der die Mündungsöffnung (25) offen ist, wobei das Ventil **dadurch gekennzeichnet ist, dass** der innere Teil (30a, 31a) einer jeden der verformbaren Lippen in die Kammer hinein längs der Länge der Lippe und senkrecht zur langen Achse der Lippe nach innen gebogen ist, wobei der innere Teil zur Linie des Dichtrandes zwischen dem inneren Teil und dem Dichtteil (30c, 31c) der Lippe hin gebogen ist.

2. Ventil (10) nach Anspruch 1, **dadurch gekennzeichnet, dass** der äußere Teil (30b, 31b) der verformbaren Lippe ebenfalls längs seiner langen Achse nach innen gebogen ist.

3. Ventil (10) nach Anspruch 1, **dadurch gekennzeichnet, dass** das Ausmaß der Biegung des äußeren Teils (30b, 31b) vom Ausmaß der Biegung des inneren Teils (30a, 31a) verschieden ist.

4. Ventil (10) nach Anspruch 3, **dadurch gekennzeichnet, dass** das Ausmaß der Biegung des inneren Teils (30a, 31a) größer als das Ausmaß der Biegung des äußeren Teils (30b, 31b) ist.

## Revendications

1. Valve (10) comprenant une extrémité d'entrée, une extrémité de sortie, une paroi (14) définissant une chambre entre elles, et un port (25) à l'extrémité de sortie défini par une ou plusieurs paires de lèvres (30, 31), chaque lèvre (30, 31) comprenant des portions allongées interne (30a, 31a) et externe (30b, 31b) reliées par une portion allongée de scellement (30c, 31c) pour venir en engagement avec la portion de scellement correspondante de l'autre lèvre de la paire de lèvres, chaque lèvre étant déformable de façon élastique depuis une première position, dans laquelle le port (25) est fermé par engagement des portions de scellement l'une avec l'autre, jusqu'à une deuxième position dans laquelle le port (25) est ouvert, la valve étant **caractérisée en ce que** la portion interne (30a, 31a) de chacune des lèvres déformables est courbée vers l'intérieur dans la chambre le long de la longueur de la lèvre et perpendiculairement à l'axe long de la lèvre, la portion interne étant courbée vers la ligne du bord de scellement entre la portion interne et la portion de scellement (30c, 31c) de la lèvre.

2. Valve (10) selon la revendication 1 **caractérisée en ce que** la portion externe (30b, 31b) de la lèvre déformable est également courbée vers l'intérieur le long de son axe long.

3. valve (10) selon la revendication 1 **caractérisée en ce que** le degré de courbure de la portion externe (30b, 31b) est différent du degré de courbure de la portion interne (30a, 31a).

4. Valve (10) selon la revendication 3 **caractérisée en ce que** le degré de courbure de la portion interne (30a, 31a) est plus grand que le degré de courbure de la portion externe (30b, 31b).
